# EUROPEAN PATENT SPECIFICATION

(11) **EP 1 239 676 B1**
(45) Date of publication and mention of the grant of the patent: **13.10.2004**
(21) Application number: 02007629.5
(22) Date of filing: 02.05.1999
(51) Int. Cl.: H04N 7/10, H04N 7/173

(54) **Method and apparatus for capacity increase and enhanced communication performance in CATV networks**
Verfahren und Vorrichtung zur Erhöhung der Kapazität und Verbesserung der Übertragungsleistung in Kabelfernsehnetzwerken
Technique permettant de renforcer les capacités et d'améliorer les prestations en matière de communication dans des réseaux de télévision par cable et appareil correspondant

(30) Priority: 01.05.1998 US 83934 P; 01.05.1998 US 83952 P
(43) Date of publication of application: 11.09.2002
(62) Divisional of application: 99917042.6
(73) Proprietor: Texas Instruments Inc., Dallas, Texas 75265 (US)
(72) Inventor: Segal, Mordechai, 46746 Herzlia, (IL); Shalvi, Ofir, 46425 Herzlia (IL); Renzic, Zvi, 62998 Tel Aviv (IL)
(74) Representative: Roberts, Gwilym Vaughan

(56) References cited:
- EP-A- 0 748 124
- WO-A-97/16046
- WO-A-97/41691
- WO-A-97/49171
- US-A- 5 710 797

## Description

### Technical Field

The present invention relates generally to communication methods and systems and in particular to communication methods and systems implemented using CATV (Cable Television) systems.

### Background of the Invention

Cable television (CATV) systems were originally intended to deliver analog television signals to homes in an essentially unidirectional manner. However, the coaxial cable used to carry these signals can support bidirectional transmission of signals, *i.e*., transmission both to and from the home. As a result, cable television companies have begun to provide data communications services to meet consumers' growing demand for high speed data transmission over computer networks, such as the Internet.

Devices known as cable modems have been developed to convert digital data to a modulated radio frequency (RF) signal, and vice versa, for transmission on a CATV system. This conversion is performed both by a cable modem at the subscriber's home and, on the other end, by headend equipment handling multiple subscribers. Thus, the subscriber receives data from a computer network using a downstream channel and transmits data to the network using an upstream channel.

As computer networks deliver increasing amounts of content to users, a need has arisen for increased throughput and communications robustness. It is also essential that communications equipment operate over a wide range of channel impairments, which can include, for example, ingress noise, burst noise impulse noise, linear distortions, non-liner distortions, and adjacent channel interference. Moreover, the different types of services that use CATV systems give rise to additional needs. For example, for data services, such as Internet access, a high packet throughput and a low packet error rate are primary considerations. For such applications, low delay is not a key consideration. For multimedia services, such as speech, video, and telephony, however, low delay is the primary consideration. It is desirable to minimize the periods of a high bit error rate (BER) for these applications. Additionally, compatibility with existing standards and equipment is important for all applications.

WO-A-97 16046 discloses a system for communicating data packets in variable length bursts over a physical layer in a multilayer data communication scheme.

EP-A-0748124 describes a communication system which receives a multi-level pulse- amplitude modulated digital signal from a limited bandwidth channel. The system includes processing stages which demodulate, sample and with the incoming signal prior to recovery of the data.

The present invention is set out in the independent claims. Some optional features are set out in the claims dependent thereto.

### Summary of the Invention

The invention is set out in the appended claims.

### Brief Description of the Drawings

In the drawings, in which like reference numbers represent like components throughout the several views,
Figure 1 depicts a CATV digital communications system operative according to the Data Over Cable Service Interface Specification (DOCSIS) protocol;
Figure 2 depicts a frequency grid over an upstream channel of a CATV network operative according to the MCNS specification;
Figure 3 depicts a reduced channel spacing frequency grid of the upstream channel that can be used in conjunction with the MCNS specification according to an embodiment of the present invention;
Figure 4 depicts a simplified block diagram of a communications apparatus constructed and operative for upstream CATV applications according to an embodiment of present invention;
Figure 5 depicts an example of an adaptive equalizer that can be used in conjunction with the embodiment depicted in Figure 4;
Figure 6 depicts an example decoder structure that can be used in conjunction with the embodiment depicted in Figure 4;
Figure 7 depicts an example structure of a modified Reed-Solomon decoder that can be used in conjunction with the embodiment depicted in Figure 4;
Figure 8 depicts a structure of an analog front end that can be used in conjunction with the embodiment depicted in Figure 4;
Figure 9 depicts a structure of a modified slicer that can be used in conjunction with the embodiment depicted in Figure 4;
Figure 10 depicts a general scheme employing diversity or retransmission techniques, or both, over different MCNS channels;
Figure 11 depicts a signal retransmission technique that can be used in conjunction with the embodiment depicted in Figure 10;
Figures 12A-12B depict two example symbol mapping schemes that can be used in conjunction with the retransmission technique depicted in Figure 11;
Figure 13 depicts an example signal diversity technique that can be used in conjunction with the embodiment depicted in Figure 10; and
Figure 14 depicts a symbol mapping scheme that can be used in conjunction with the signal diversity technique depicted in Figure 13.

The invention is amenable to various modifications and alternative forms. Specifics thereof have been shown by way of example in the drawings and will be described in detail. It should be understood, however, that the intention is not to limit the invention to the particular embodiments described. On the contrary, the intention is to cover all modifications, equivalents, and alternatives falling within the scope of the invention as defined by the appended claims.

### Detailed Description

The present invention is applicable to a variety of communications networks operating over a cable television (CATV) infrastructure. An appreciation of various aspects of the invention can be gained through a discussion of various application examples operating in such an environment.

According to one example embodiment of the present invention, channel throughput and communications robustness are increased in the upstream or return channel of a CATV network. A filter arrangement is used to reduce interference between adjacent frequency channels, facilitating the use of a frequency grid characterized by reduced channel spacing.

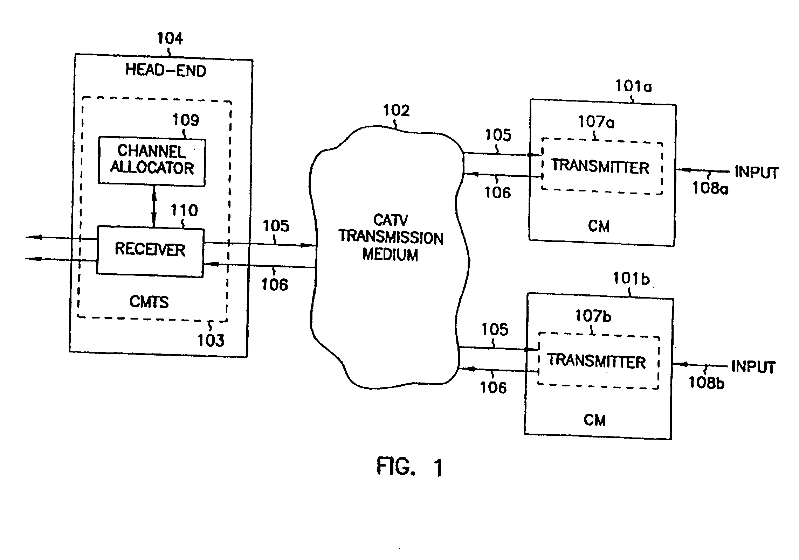

Referring now to the drawings, Figure 1 depicts a CATV digital communication system embodying the present invention and operating according to the MCNS specification. For additional information regarding this specification, reference is made to Data-Over-Cable Interface Specifications; Radio Frequency Interface Specification SP-RF1 101-970321, published by MCNS Holdings, L. P. on March 21, 1997 (hereinafter referred to as the MCNS specification). The system includes one or more cable modems (CMs) 101a, 101b and a CATV transmission medium 102. It should be noted that, while Figure 1 depicts two CMs, a greater or lesser number of CMs can be present in the system. A cable modem terminating system (CMTS) 103, which is part of CATV head-end equipment 104, is present at the other side of the network. Information is transmitted from the CMTS 103 to the CMs 101 using a downstream channel 105, and from the CMs 101 to the CMTS 103 using an upstream channel 106.

The CMs 101a, 101b include upstream transmitters 107a, 107b that receive input data 108a, 108b and transmit the input data 108a, 108b using a Quadrature Phase Shift Keyring/Quadrature Amplitude Modulation (QPSK/16QAM) modulation scheme with a configurable transmission pulse, pre-equalizer parameters, power level, carrier frequency, symbol clock, and Reed-Solomon forward error correction (FEC) code parameters. Transmission is performed in a burst mode frequency/time division multiplexing access (FDMA/TDMA) scheme in which each CM 101 transmits requests for bandwidth allocation, and in which a channel allocator 109 sends control messages to the CMs 101 via the downstream channel 105, indicating the time period in which the addressed CM 101 can transmit. The CM 101 is capable of modifying its signal parameters, including transmission power, carrier frequency, transmission pulse, and pre-equalizer parameters, according to these control messages from the channel allocator 109.

The CMTS 103 includes a receiver 110 and the channel allocator 109. The receiver 110 detects the information bits fed into the inputs 108a, 108b of the upstream transmitters 107a, 107b. The receiver 110 then estimates the parameters of the received signals, and outputs these parameters to the channel allocator 109. The channel allocator 109 then allocates frequency ranges and configures transmission parameters for the individual CMs 101 in a manner that will make efficient use of the channel bandwidth and that will enable the receiver to detect the signals properly.

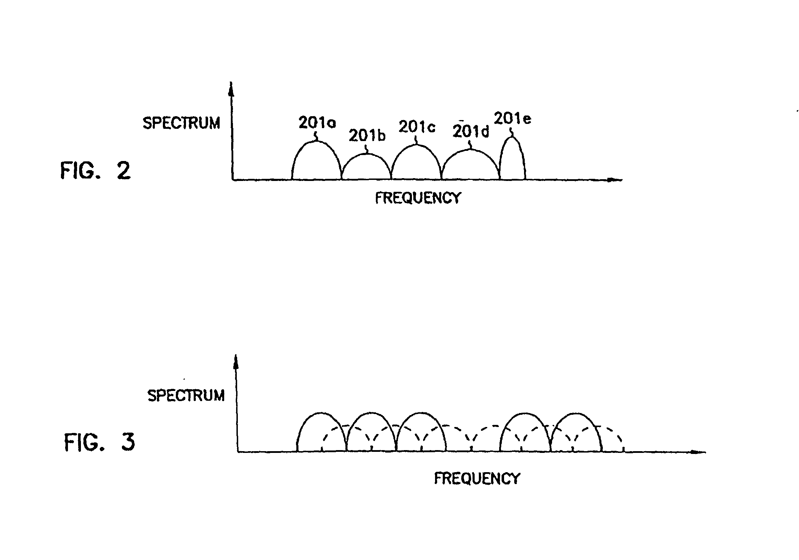

Figure 2 depicts a frequency constellation of a CATV network operative according to the MCNS specification. Signals 201a-201c have the same nominal symbol rate, while signal 201d has a larger symbol rate, and signal 201e has a lower symbol rate. The nominal bandwidth of each signal 201a-201c is 1.25 times its respective symbol rate.

Figure 3 depicts an example of a reduced channel spacing frequency grid with which the present invention can be used. The channel spacing is less than the signal bandwidth, which is 1.25 times the symbol rate of the signals. Such a system uses overlapped transmission scheme, such as that disclosed in U.S. Patent 5,710,797, issued on January 20, 1998, assigned to the instant assignee, and entitled METHOD AND APPARATUS FOR DIGITAL COMMUNICATION IN THE PRESENCE OF CLOSELY SPACED ADJACENT CHANNELS.

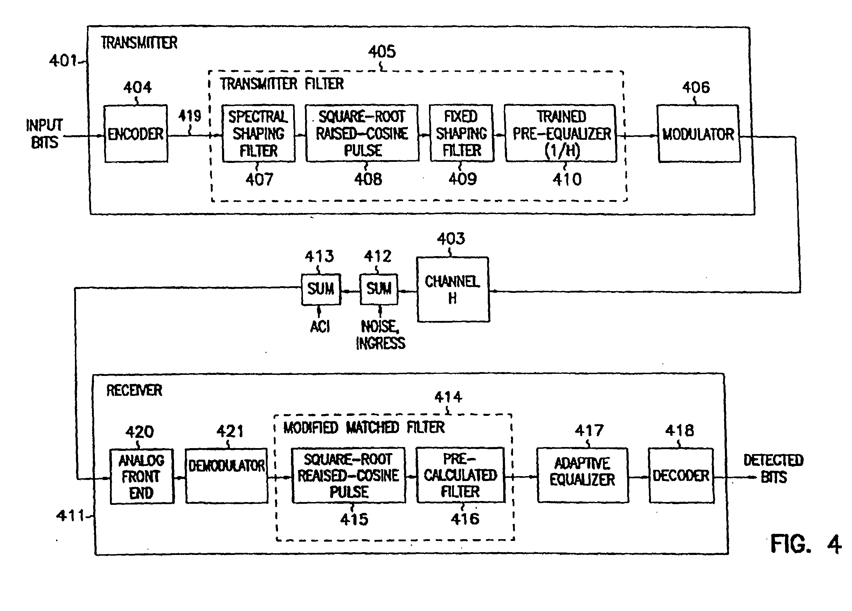

Referring now to Figure 4, a simplified block diagram is depicted of a communications apparatus constructed and operative for upstream CATV applications according to a particular embodiment of the present invention. The apparatus of Figure 4 includes a transmitter 401 that transmits a digital communication signal 402 through an upstream channel 403. The transmitter 401 comprises an encoder 404, a transmission filter 405, and a modulator 406. The transmission filter 405 comprises a cascade of a spectral shaping filter 407, a square-root raised cosine filter 408, a fixed shaping filter 409, and a trained pre-equalizer 410. This transmission structure may be supported by the current MCNS specification, and therefore may be supported by current MCNS implementations.

The encoder 404 can include any Forward Error Correction (FEC) code, such as Reed-Solomon encoding. The encoder 404 optionally uses an interleaver within the packet in order to counteract impulse/burst noise. Using an interleaver in this manner, however, involves modifications that may not be consistent with existing DOCSIS specifications. Alternate signal constellations can be used instead of those specified in the MCNS specification. Examples of such alternate signal constellations include, but are not limited to, pi/4-QPSK, offset-QPSK, 8PSK, 32QAM, 64QAM, 128QAM, and 256QAM. The choice of a particular signal constellation is dependent on channel conditions. Tomlinson precoding can also be used to avoid a DFE at the receiver 411, but this technique also involves modifications that may not be consistent with existing DOCSIS specifications.

According to a particular implementation, the spectral shaping filter 407 comprises a duo-path filter (1+αz^{-N}, where α can be a complex number) or any other pre-equalizer that can be used to achieve an approximation to the water-pouring spectral density in conjunction with a DFE receiver, e.g. (1+e^{-jω0}z⁻¹) for elimination of narrow-band interference at ω₀. The purpose of the shaping filters 407, 408, and 409 is to reduce adjacent channel interference (ACI) to facilitate the use of a frequency grid characterized by reduced channel spacing.

The fixed shaping filter 409 is designed for a more or less known level of signal-to-noise (SNR) ratio and Signal-to-Interference (C/I) ratio, and may be loaded during ranging when the C/I and SNR are assessed. The trained pre-equalizer 410 performs essentially the inverse 1/H of the transfer function H of the upstream channel 403 and is trained at the receiver 411, where the parameters describing the upstream channel 403 are transmitted to the CM 101 through a downstream channel 105 of Figure 1.

The transmitted signal 402 is impaired by the linear distortion H of the upstream channel 403, by non-linear distortions, and by additive noise sources, including ingress noise and adjacent channel interference. The effects of ingress noise and adjacent channel interference are conceptually illustrated in Figure 4 as summing blocks 412 and 413, respectively.

The receiver 411 includes an analog front end 420, a demodulator 421, and a modified matched filter (MMF) 414, which performs a convolution of a square-root raised cosine filter 415 and a pre-calculated filter 416 working at N times the symbol rate (*e.g*., N=2). The MMF filter 414 can be loaded from a table according to the estimated C/I and SNR. It should be noted that the pre-calculated filter 416 can be jointly designed with the transmission filter 405 to improve the overall SNR and C/I at the receiver 411. The output of the MMF 414 is provided to an adaptive equalizer 417, followed by a decoder 418, which may include additional filtering, a Viterbi detector, and a FEC decoder.

The MMF 414 can be designed to have low side lobes in the time domain. This is a deviation from an ideal square-root raised-cosine pulse. This deviation might be compensated for by the pre-equalizer 410. The reduction in side lobes in the time domain can also prevent the propagation of an impulse noise to symbols that were not originally hit by the impulse.

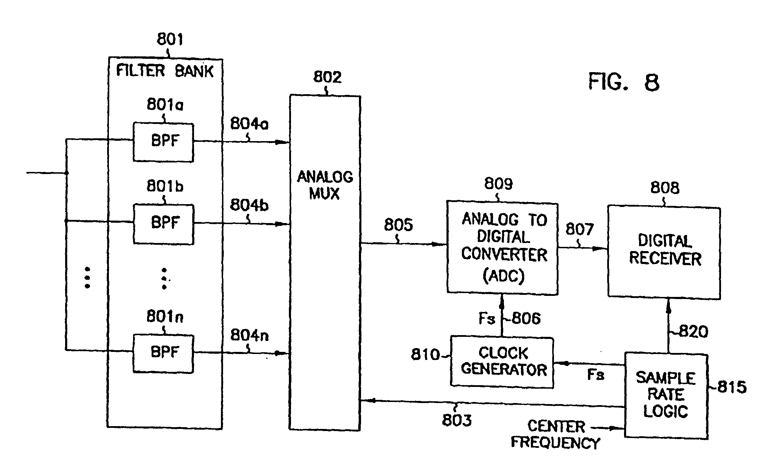

Figure 8 depicts an example implementation of an analog front end 420. This implementation includes a filter bank 801 of band pass filters (BPFs) 801a, 801b,..., 801n. Each BPF 801 is centered around a different frequency. The output of the BPFs 801, denoted in Figure 8 with reference numerals 804a, 804b, ..., 804n, is input into an analog multiplexer 802. Sample rate logic 815 generates a select signal 803 as a function of the center frequency. The select signal 803 selects which of the BPF outputs 804 is coupled to an output 805 of the multiplexer 802.

A parameter Fₛ, also generated by the sample rate logic 815 as a function of the center frequency and denoted with reference numeral 806, defines the sample rate of an analog to digital converter (ADC) 809 and is provided by a clock generator 810. In this embodiment, the sample rate can be smaller than the Nyquist rate and can be chosen such that deliberate aliasing will shift the center frequency of the desired signal from its original frequency F_{ca}, which can be greater than Fₛ/2, to a new frequency F_{cb}, such that F_{cb} is less than Fₛ/2. Thus, deliberate aliasing facilitates the use of discrete ADC components to sample signals having a frequency greater than half the frequency of the ADC. It will be appreciated by those skilled in the art that, when aliasing occurs due to undersampling, the digital receiver 808 should compensate for it. Accordingly, the sample rate logic 815 also provides a spectrum inversion indication 820 to the digital receiver 808 to indicate that undersampling has occurred.

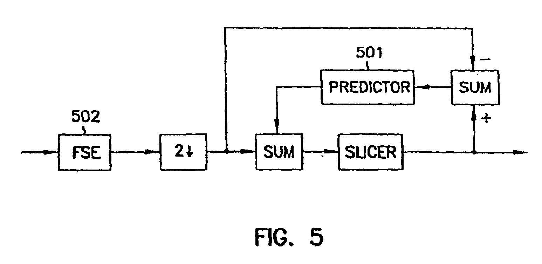

An example of an adaptive equalizer is depicted in Figure 5. The adaptive equalizer of Figure 5 is an adaptive Decision Feedback Equalizer (DFE) operating in a noise prediction configuration 501, and it may be preceded by an adaptive FSE 502. By using the adaptive FSE 502, the magnitude of the DFE taps can be reduced using tap leakage procedures, thus reducing DFE error propagation. To avoid any error propagation at all, the adaptive FSE only can be used, completely avoiding the DFE. The equalizer taps are modified by a Linear Mean Square (LMS) approach. It can be trained during the ranging phase of the CMTS and/or pre-loaded using prior knowledge of channel spacing, and perhaps C/I and SNR.

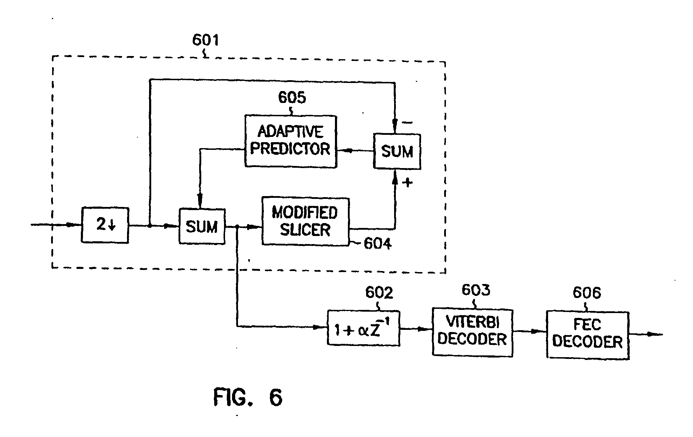

Figure 6 depicts the structure of the decoder when a duo-path pulse 1+αz^{-N}, where α can be a complex number, is used. An equalizer 601 is adjusted to achieve a sum of two symbols at its output. The output of the equalizer passes through a 1+αz^{-N} filter 602, and then goes to a Viterbi detector 603. For example, if the encoder output 419 in Figure 4 is QPSK symbols ±[±, then the modified slicer 604 of the DFE searches for constellation points I+jQ, where I and Q can have values of 2, 0, and -2. The adaptive DFE 605 is trained to minimize the error between the slicer input and the slicer output.

The complexity of the Viterbi is 4 states and 16 branches per QPSK symbol and 16 states and 256 branches in 16QAM. As an alternative, a reduced 16QAM version of 4 states and 16 branches per symbol can be used.

It should be noted that, instead of a DFE, advance equalization techniques such as a maximum likelihood sequence estimator (MLSE) can be used. The idea here is to implement noise prediction and compensation of deliberate ISI due to transmission pulse using a reduced Viterbi equalizer.

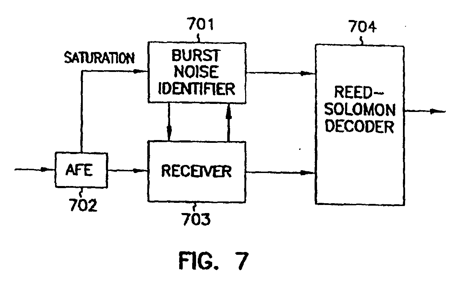

The FEC decoder 606 can be implemented using a conventional Reed-Solomon decoder, assuming this is the code being used in the system. Alternatively, one can use the configuration depicted in Figure 7, where the burst noise identifier 701 identifies an exceptional data point based on inputs from an Analog Front End (AFE) 702 and a QPSK/16QAM receiver 703 and analyzes the presence and the length of noise burst. The Reed-Solomon decoder 704 uses erasures for the data bytes that are suspected to be affected by noise.

The exceptional data points are detected by either saturations or very large values of the data at the signal path (*e.g.*, at the slicer input), a sequence of large error values at the slicer, or yielding of different symbol decisions for the two signals in retransmission mode. The receiver has a state machine that estimates burst duration according to the indication of exceptional data points and puts the Reed-Solomon decoder in an erasure mode during the burst. In addition, the receiver performs clipping of signals with exceptionally large magnitudes.

The present invention can be used in conjunction with reduced spaced signal constellations, such as that depicted in Figure 3, by following the procedures described in U.S. Patent 5,710,797. In particular, the algorithm may iterate as follows. For a set of overlapping signals, the previously processed signal is subtracted from the received signal. A signal is then detected using the receiver 410 and is remodulated. The algorithm should start with the signal having the best C/I and SNR, which is typically the strongest signal, or a signal that has only one overlapping ACI, rather than two.

Pairs of severely interfering signals may be jointly detected using an encoded joint maximum likelihood approach, as part of the iterations of a method, the general procedure of which is outlined in U.S. Patent 5,710,797, The joint maximum likelihood procedure involves a Viterbi-like algorithm for which a trellis diagram with a branch metric is defined. The complexity of such an approach, based on a memory constraint of three symbols for each signal, is 16 states and 256 branches per symbol with QSPK and 256 states and 64K branches per symbol in 16QAM. The number of transitions can be significantly reduced using a reduced state Viterbi algorithm, *e.g.*, by discarding states in the trellis diagram that are unlikely for the current signal sample. The algorithm then selects a survivor path for each of the remaining new states based on the cumulative metric for all possible paths entering the new state from the previous states, followed by the selection of the leading path, and detection of the information bits. The algorithm then discards unlikely new states based on the cumulative metrics.

The present invention can also be used in conjunction with a frequency hopping scheme, using joint frequency/time axis forward error correction and interleaving.

As part of the signal acquisition stage, in which the received signal parameters are estimated, the receiver 411 makes use of a preamble field in a data packet. In the presence of impulse and burst noise, the preamble should be longer than the duration of the longest error burst that can be recovered by the receiver (*i*.*e*., at least 2t bytes if Reed-Solomon block code (N-t,N) is used, where N is the block size. The preamble is split into sections, and the receiver identifies sections that are noisy, for example, according to the residual error between the incoming signal and the expected signal according to the known training data and estimated parameters. Sections that are noisy due to impulse or burst noise are neglected.

In case the receiver is capable of recovering a very long error burst, in particular, if interleaving is used, then the packet structure PDDDPDDDD...D may be used, where P is a preamble section and D is a data section. The distance between P sections will be larger then the maximum burst length that can be received.

Acquisition performance can be severely affected by narrow-band interference, such as ingress noise, *e*.*g*., narrowband interference, or partially overlapping channels. Thus it is particularly advantageous to use a preamble that has low spectral density at frequency regions of high noise and high spectral density at frequency regions of low noise. This can be achieved using a pre-equalizer in the transmitter, or by using a non-white sequence of symbols. As a result, the interference of the transmitted preamble into overlapping adjacent channels will be reduced, enabling robust acquisition of overlapping signals.

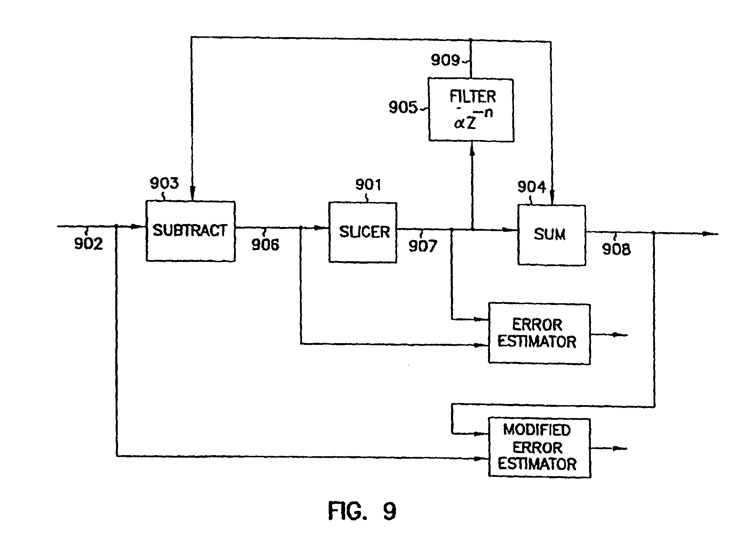

Figure 9 depicts a modified slicer structure that can be used in connection with the communication apparatus of Figure 4. In this modified slicer structure, a slicer 901 produces an estimate 902 of the original transmitted symbol 419 of Figure 4. This estimate is filtered by a digital filter whose response is αZ⁻ⁿ, that is, delayed by n taps and multiplied by α, where α can be a complex number. An output 909 of the filter 905 is subtracted from the next input sample 902 by a subtractor 903 to generate a slicer input 906. The output 909 is also summed with a slicer output 907 by a summer 904 to generate a modified slicer output 908. In receivers where an error estimate is needed for adaptation, such an estimate can be calculated by subtracting the slicer output 907 from the slicer input 906 or by subtracting the modified slicer output 908 from the estimate 902. The latter calculation method realizes improved robustness for error propagation.

According to another embodiment of the present invention, channel throughput and communications robustness are increased using re-transmission techniques and/or diversity techniques. These techniques are particularly useful when the receiver is incapable of detecting the transmitted data from a single transmission. There are different MCNS channels, *e.g*., different time slots or different carrier frequencies.

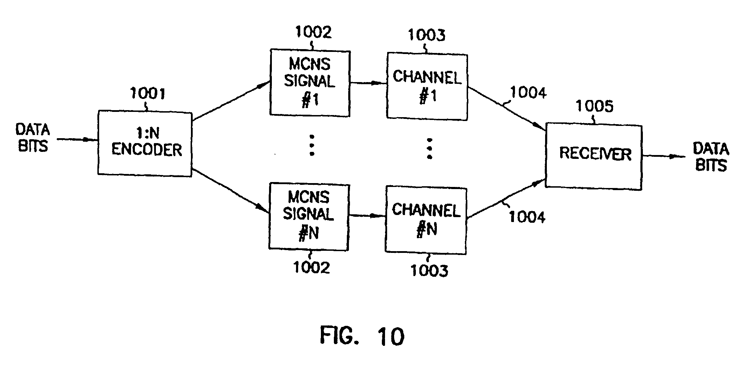

Figure 10 depicts a general scheme that utilizes diversity and/or retransmission techniques over different MCNS channels according to this embodiment of the present invention. A I:N rate encoder 100 1 reproduces the current symbol or the current FEC block N times. Each reproduced symbol or block is transmitted using N MCNS signals 1002 to be communicated to the CMTS 103 of Figure 1 over N different channels 1003. It will be appreciated that the N channels represent physical (*e.g*., different carriers) and/or logical channels and can overlap in frequency. Outputs 1004 of the N channels are provided to a receiver 1005, which performs weighted soft-combining of the received signals 1004. The soft-combining comprises Mean Squared Error (MSE) estimation as well as identification of burst noise within the packet, followed by weighted or selective combining, as appropriate. The receiver can also incorporate joint equalization of the received signals.

The system in Figure 10 can also be interpreted as a retransmission technique in which the first MCNS signal transmitted over the first channel is the original message and all subsequent messages are requested by the CMTS 103 of Figure 1 one, or several, at a time to be retransmitted. According to a specific embodiment, a soft-combining method is applied to all the received messages.

For example, a retransmission request, possibly at a different carrier, can be sent from the CMTS 103 to the CM 101 of Figure 1 via the downstream channel 105 only if a Reed-Solomon block is received incorrectly. If a Reed-Solomon block is received incorrectly, then instead of requesting retransmission, the CMTS 103 tells the CM 101 what it received, so that the CM 101 can send to the CMTS 103 a short correction message rather than sending the whole packet again. For example, the CMTS 103 may send back to the CM 101 an indication of the quality level of the detected symbols or the detected symbols themselves. Since the downstream channel 105 is much wider and more reliable than the upstream channel 106, this approach may be preferable.

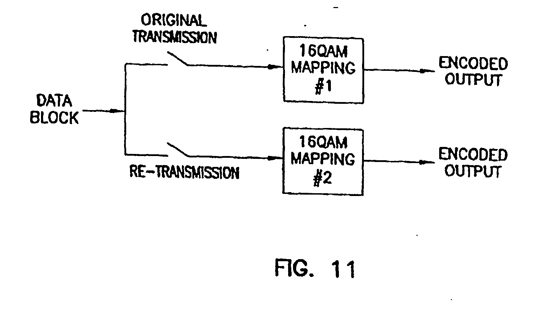

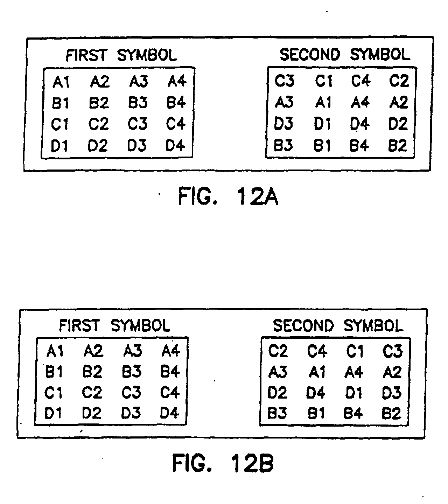

Figure 11 depicts a particular retransmission scheme in which a different mapping for 16QAM is used for the retransmission. Two symbol mapping schemes are illustrated in Figures 12A-12B, in which A1, A2, A3, A4, B1, B2, B3, B4, C1, C2, C3, C4, D1, D2, D3, and D4 represent the sixteen combinations of four bits.

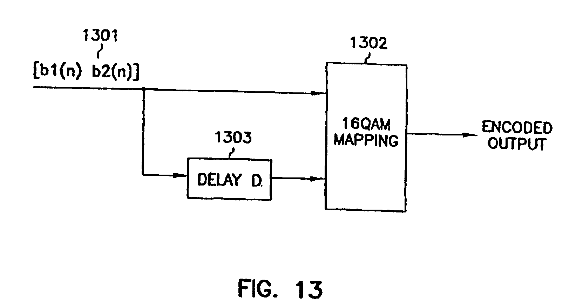

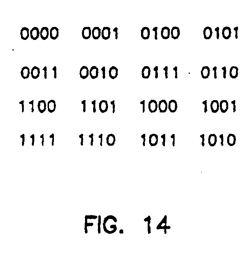

Figure 13 depicts a signal diversity system. In this system, two information bits [b1(n) b2(n)], denoted by reference numeral 1301, per symbol are transmitted. The symbols are 16QAM and are mapped using a signal mapping block 1302 as a function of [b1(n) b2(n) b1(n-D) b2(n-D)], where D is a delay introduced by a delay block 1303. Figure 14 depicts an example mapping scheme.

Using this approach, bursts of length D symbols can be recovered. In this approach, the carrier frequency may change between two transmissions of the same data. This change in carrier frequency can be used to protect from narrow band interference.

## Claims

1. A communication system for communicating a data signal using a cable television transmission medium (102), the communication arrangement comprising:
an encoder (404) configured to encode an input data stream as an encoder output signal;
a transmission filter arrangement (405), responsive to the encoder output signal and configured to reduce adjacent channel interference in the encoder output signal and to generate a filter output signal;
a modulator (406), configured to modulate the filter output signal generating a modulated radio frequency signal for transmission using the cable television transmission medium;
an analog front end arrangement (420), configured to sample a desired signal from the modulated radio frequency signal at less than the Nyquist rate and thereby to cause a shift in a center frequency of the desired signal from an initial frequency to a lower frequency ;
a modified matched filter (414) configured to perform a convolution of a square-root raised cosine filter (415) and a pre-calculated filter (416) and to generate an modified matched filter output signal;
an adaptive equalizer (417), responsive to the modified matched filter output signal and configured to generate an equalizer output signal; and
a decoder (418), responsive to the equalizer output signal and configured to decode the equalizer output signal and to generate a stream of detected data.

2. A communication system according to claim 1, including a receiver (411) arrangement coupled to receive the modulated radio frequency signal and configured to generate a stream of detected data based on the received modulated radio frequency signal.

3. A communication system according to claim 1 or claim 2, wherein the analog front end arrangement comprises:
a plurality of band pass filters coupled to receive the modulated signal, each of the band pass filters centered around a different frequency;
a multiplexer coupled to receive output signals from the band pass filters and to couple a selected one of the band pass filter output signals to an output of the multiplexer;
an analog to digital converter, responsive to the output of the multiplexer and to an output of a clock signal generator and configured to provide a digital signal, generated as a function of the output of the multiplexer and the output of the clock signal generator, to a digital receiver, and preferably wherein the analog front end arrangement further comprises sample rate logic configured to provide, as a function of the center frequency, a select signal to the multiplexer, a rate parameter to the clock signal generator, and a spectrum inversion indication to the digital receiver.

4. A communication system, according to claim 2, wherein the adaptive equalizer comprises an adaptive decision feedback equalizer, and/or wherein the precalculated filter comprises;
a pre-equalizer (601), configured to reduce interference attributable to at least one of ISI and ingress noise associated with a communication channel, and
a 1+αz^{-N} filter (602), coupled to the output of the pre-equalizer and configured to generate a filter output signal;
and wherein the receiver arrangement comprises
a Viterbi decoder (603), configured to generate a Viterbi decoder output signal as a function of the filter output signal; and
a forward error correction decoder, configured to generate a corrected decoder output signal in response to the Viterbi decoder output signal.

5. A communication system, according to claim 1, further comprising a modified slicer arrangement configured to produce an estimate of an original transmitted symbol, and preferably wherein the modified slicer arrangement comprises:
a slicer (901) configured to estimate (902) an output of the encoder;
a filter (905) having a response of αZ^{-N};
a summing arrangement configured to add an output of the slicer to an output of the filter having a response of αZ^{-N};
a subtracting arrangement (903) configured to subtract the output of the filter having a response of αZ^{-N} from an input of the modified slicer;
an error estimation arrangement, coupled to both an input and the output of the slicer and configured to estimate a receiver error; and
a modified error estimation arrangement, coupled to both an input and the output of the modified slicer and configured to estimate the receiver error.

6. A communication method for communicating a data signal using a cable television transmission medium, the communication method comprising:
encoding an input data stream as an encoder output signal;
filtering the encoder output signal to reduce adjacent channel interference in the encoder output signal, thereby generating a filter output signal;
modulating the filter output signal to generate a modulated radio frequency signal for transmission using the cable television transmission medium;
receiving the modulated radio frequency signal;
generating a stream of detected data based on the received modulated radio frequency signal;
sampling a desired signal from the received modulated radio frequency signal at less than the Nyquist rate and causing thereby a shift in a center frequency of the desired signal from an initial frequency to a lower frequency;
performing a convolution of a square-root raised cosine filter and a pre-calculated filter and to generate a modified matched filter output signal;
generating an equalizer output signal as a function of the modified matched filter output signal; and
decoding the equalizer output signal to generate the stream of detected data.

7. A communication method, according to claim 6, further comprising:
providing a select signal to the multiplexer as a function of the center frequency;
providing a rate parameter as a function of the center frequency; and
providing a spectrum inversion indication as a function of the center frequency.

## Patentansprüche

1. Ein Kommunikationssystem zum Übermitteln eines Datensignals unter Verwendung eines Kabelfernsehübertragungsmediums (102), wobei die Kommunikationsanordnung aufweist:
einen Codierer (404), der so ausgebildet ist, daß er einen eingegebenen Datenstrom als Codiererausgangssignal codiert;
eine auf das Codiererausgangssignal ansprechende Übertragungsfilteranordnung (405), die so ausgebildet ist, daß sie die Nachbarkanalstörung in dem Codiererausgangssignal reduziert und ein Filterausgangssignal erzeugt;
ein Modulator (406), der so ausgebildet ist, daß er das Filterausgangssignal moduliert, um ein moduliertes Hochfrequenzsignal zur Übertragung unter Verwendung des Kabelfernsehübertragungsmediums zu erzeugen;
eine analoge Front-End-Anordnung (420), die so ausgebildet ist, daß sie ein gewünschtes Signal aus dem modulierten Hochfrequenzsignal bei weniger als der Nyquist-Rate abtastet und dadurch eine Verschiebung einer Mittenfrequenz des gewünschten Signals von einer anfänglichen Frequenz zu einer geringeren Frequenz bewirkt;
ein modifiziertes abgestimmtes Filter (414), das so ausgebildet ist, daß es eine Faltung eines Quadratwurzel-Cosinus-Filters (415) und eines vorab-berechneten Filters (416) ausführt und ein Ausgangssignal des modifizierten abgestimmten Filters erzeugt;
einen adaptiven Equalizer (417), der auf das Ausgangssignal des modifizierten abgestimmten Filters anspricht und so ausgebildet ist, daß er ein Equalizerausgangssignal erzeugt; und
einen Decodierer (418), der auf das Equalizerausgangssignal anspricht und so ausgebildet ist, daß er das Equalizerausgangssignal decodiert und einen Strom erfaßter Daten erzeugt.

2. Ein Kommunikationssystem nach Anspruch 1, enthaltend eine Empfängeranordnung (411), die so eingekoppelt ist, daß sie das modulierte Hochfrequenzsignal empfängt und einen Strom erfaßter Daten auf der Grundlage des empfangenen modulierten Hochfrequenzsignals erzeugt.

3. Ein Kommunikationssystem nach Anspruch 1 oder Anspruch 2, wobei die analoge Front-End-Anordnung aufweist:
mehrere Bandpaßfilter, die so eingekoppelt sind, daß sie das modulierte Signal empfangen, wobei jedes der Bandpaßfilter um eine andere Frequenz herum zentriert ist;
einen Multiplexer, der so eingekoppelt ist, daß er die Ausgangssignale aus den Bandpaßfiltern empfängt und ein ausgewähltes Bandpaßfilterausgangssignal an einen Ausgang des Multiplexers koppelt;
einen Analog-Digital-Umsetzer, der auf das Ausgangssignal des Multiplexers und auf ein Ausgangssignal eines Taktsignalgenerators anspricht und so konfiguriert ist, daß er ein als Funktion des Ausgangssignal des Multiplexers und des Ausgangssignals des Taktsignalgenerators erzeugtes digitales Signal an einen digitalen Empfänger zur Verfügung stellt, und wobei vorzugsweise die analoge Front-End-Anordnung ferner eine Abtastratenlogik aufweist, die so ausgebildet ist, daß sie als Funktion der Mittenfrequenz ein Auswahlsignal an den Multiplexer, einen Taktratenparameter an den Taktsignalgenerator und eine Spektruminversionsanzeige an den digitalen Empfänger zur Verfügung stellt.

4. Ein Kommunikationssystem nach Anspruch 2, wobei der adaptive Equalizer einen adaptiven Entscheidungsrückkopplungsequalizer umfaßt und/oder wobei das vorab-berechnete Filter aufweist:
einen Pre-Equalizer (601), der so ausgebildet ist, daß er eine Störung reduziert, die auf dem Kommunikationskanal zugeordnetes ISI und/oder Eindringrauschen zurückzuführen ist, und
ein 1+αz^{-N}-Filter (602), das mit dem Ausgang des Pre-Equalizers gekoppelt und so ausgebildet ist, daß es ein Filterausgangssignal erzeugt; und
wobei die Empfängeranordnung aufweist:
einen Viterbi-Decodierer (603), der so ausgebildet ist, daß er ein Viterbi-Decodiererausgangssignal als Funktion des Filterausgangssignals erzeugt; und
einen Vorwärtsfehlerkorrekturdecodierer, der so ausgebildet ist, daß er ein korrigiertes Decodiererausgangssignal in Abhängigkeit von dem Viterbi-Decodiererausgangssignal erzeugt.

5. Ein Kommunikationssystem nach Anspruch 1, ferner aufweisend eine modifizierte Slicer-Anordnung, die so ausgebildet ist, daß sie eine Abschätzung eines ursprünglich übermittelten Symbols erzeugt, und wobei die modifizierte Slicer-Anordnung vorzugsweise aufweist:
einen Slicer (901), der so ausgebildet ist, daß er ein Ausgangssignal des Codierers abschätzt (902);
ein Filter (905), das eine Antwort von αZ^{-N} aufweist;
eine Summieranordnung, die so ausgebildet ist, daß sie ein Ausgangssignal des Slicers mit einem Ausgangssignal des Filters, das die Antwort αZ^{-N} aufweist, addiert;
eine Subtrahieranordnung (903), die so ausgebildet ist, daß sie das Ausgangssignal des Filters mit der Antwort αZ^{-N} von einem Eingangssignal des modifizierten Slicers subtrahiert;
eine Fehlerabschätzanordnung, die sowohl mit einem Eingang als auch dem Ausgang des Slicers gekoppelt ist und so ausgebildet ist, daß sie einen Empfängerfehler abschätzt; und
eine modifizierte Fehlerabschätzanordnung, die sowohl mit einem Eingang als auch dem Ausgang des modifizierten Slicers gekoppelt ist und so ausgebildet ist, daß sie den Empfängerfehler abschätzt.

6. Ein Kommunikationsverfahren zum Übermitteln eines Datensignals unter Verwendung eines Kabelfernsehübertragungsmediums, wobei das Kommunikationsverfahren umfaßt:
Codieren eines eingegebenen Datenstroms als Codiererausgangsignal;
Filtern des Codiererausgangssignals, um Nachbarkanalstörungen in dem Codiererausgangssignal zu reduzieren, womit ein Filterausgangssignal erzeugt wird;
Modulieren des Filterausgangssignals, um ein moduliertes Hochfrequenzsignal zur Übertragung unter Verwendung des Kabelfernsehübertragungsmediums zu erzeugen;
Empfangen des modulierten Hochfrequenzsignals;
Erzeugen eines Stroms erfaßter Daten auf der Grundlage des empfangenen modulierten Hochfrequenzsignals;
Abtasten eines gewünschten Signals aus dem empfangenen modulierten Hochfrequenzsignal bei weniger als der Nyquist-Rate, wodurch eine Verschiebung in einer Mittenfrequenz des gewünschten Signals von einer anfänglichen Frequenz zu einer geringeren Frequenz bewirkt wird;
Durchführen einer Faltung eines Quadratwurzel-Cosinus-Filters und eines vorab-berechneten Filters und Erzeugen eines Ausgangssignals eines modifizierten abgestimmten Filters;
Erzeugen eines Equalizer-Ausgangssignals als Funktion des Ausgangssignals des modifizierten abgestimmten Filters; und
Decodieren des Equalizer-Ausgangssignals, um den Strom erfaßter Daten zu erzeugen.

7. Ein Kommunikationsverfahren nach Anspruch 6, ferner umfassend:
Bereitstellen eines Auswahlsignals an den Multiplexer als Funktion der Mittenfrequenz;
Bereitstellen eines Taktratenparameters als Funktion der Mittenfrequenz; und
Bereitstellen einer Spektruminversionsanzeige als Funktion der Mittenfrequenz.

## Revendications

1. Système de communication pour transmettre un signal de données au moyen d'un support de transmission de télévision par câble (102), l'agencement de communication comprenant :
un codeur (404) configuré pour coder un flux de données entrant sous la forme d'un signal de sortie du codeur ;
un agencement de filtre d'émission (405) réagissant au signal de sortie du codeur et configuré pour réduire l'interférence entre canaux adjacents dans le signal de sortie du codeur et pour générer un signal de sortie du filtre ;
un modulateur (406) configuré pour moduler le signal de sortie du filtre, générant un signal radiofréquence modulé à émettre via le support de transmission de télévision par câble ;
un agencement de tête de réseau analogique (420) configuré pour échantillonner un signal souhaité provenant du signal radiofréquence modulé à une fréquence inférieure à la fréquence de Nyquist, et pour provoquer ainsi un décalage de la fréquence centrale du signal souhaité à partir d'une fréquence initiale vers une fréquence inférieure ;
un filtre adapté modifié (414) configuré pour réaliser une convolution d'un filtre en cosinus surélevé en racine carrée et d'un filtre pré-calculé (416), et pour générer un signal de sortie du filtre adapté modifié ;
un égaliseur adaptatif (417) réagissant au signal de sortie du filtre adapté modifié et configuré pour générer un signal de sortie de l'égaliseur ; et
un décodeur (418) réagissant au signal de sortie de l'égaliseur et configuré pour décoder le signal de sortie de l'égaliseur et pour générer un flux de données détectées.

2. Système de communication selon la revendication 1 comprenant un agencement de récepteur (411) connecté pour recevoir le signal radiofréquence modulé et configuré pour générer un flux de données détectées sur la base du signal radiofréquence modulé reçu.

3. Système de communication selon la revendication 1 ou 2 dans lequel l'agencement de tête de réseau analogique comprend :
une pluralité de filtres passe-bande connectés pour recevoir le signal modulé, chacun des filtres passe-bande étant centré autour d'une fréquence différente ;
un multiplexeur connecté pour recevoir des signaux de sortie provenant des filtres passe-bande et pour connecter l'un des signaux de sortie des filtres passe-bande à une sortie du multiplexeur ;
un convertisseur analogique-numérique réagissant à la sortie du multiplexeur et à une sortie d'un générateur de signaux d'horloge, et configuré pour fournir un signal numérique, généré en fonction de la sortie du multiplexeur et de la sortie du générateur de signaux d'horloge, à un récepteur numérique, et de préférence dans lequel l'agencement de tête de réseau analogique comprend en outre une logique de fréquence d'échantillonnage configurée pour fournir, en fonction de la fréquence centrale, un signal de sélection au multiplexeur, un paramètre de fréquence au générateur de signaux d'horloge, et une indication d'inversion de spectre au récepteur numérique.

4. Système de communication selon la revendication 2 dans lequel l'égaliseur adaptatif comprend un égaliseur récursif avec décision adaptatif, et/ou dans lequel le filtre pré-calculé comprend :
un pré-égaliseur (601) configuré pour réduire l'interférence attribuable à au moins un facteur parmi l'interférence inter-symbole (ISI) et le bruit d'entrée associé à un canal de communication, et
un filtre 1+αz^{-N} (602) connecté à la sortie du pré-égaliseur et configuré pour générer un signal de sortie du filtre ;
et dans lequel l'agencement de récepteur comprend
un décodeur de Viterbi (603) configuré pour générer un signal de sortie du décodeur de Viterbi en fonction du signal de sortie du filtre ; et
un décodeur à correction d'erreur directe configuré pour générer un signal de sortie du décodeur corrigé en réponse au signal de sortie du décodeur de Viterbi.

5. Système de communication selon la revendication 1 comprenant en outre un agencement d'éminceur modifié configuré pour produire une estimation d'un symbole transmis à l'origine, et de préférence dans lequel l'agencement d'éminceur modifié comprend :
un éminceur (901) configuré pour estimer (902) une sortie du codeur ;
un filtre (905) ayant une réponse en αZ^{-N} ;
un agencement d'addition configuré pour ajouter une sortie de l'éminceur à une sortie du filtre ayant une réponse en αZ^{-N} ;
un agencement de soustraction (903) configuré pour soustraire la sortie du filtre ayant une réponse en αZ^{-N} d'une entrée de l'éminceur modifié ;
un agencement d'estimation d'erreur connecté à la fois à une entrée et à la sortie de l'éminceur et configuré pour estimer une erreur du récepteur ; et
un agencement d'estimation d'erreur modifié connecté à la fois à une entrée et à la sortie de l'éminceur modifié et configuré pour estimer l'erreur du récepteur.

6. Procédé de communication pour transmettre un signal de données au moyen d'un support de transmission de télévision par câble, le procédé de communication comprenant :
le codage d'un flux de données entrant sous la forme d'un signal de sortie du codeur ;
le filtrage du signal de sortie du codeur pour réduire l'interférence entre canaux adjacents dans le signal de sortie du codeur, générant ainsi un signal de sortie du filtre ;
la modulation du signal de sortie du filtre pour générer un signal radiofréquence modulé à émettre via le support de transmission de télévision par câble ;
la réception du signal radiofréquence modulé ;
la génération d'un flux de données détectées sur la base du signal radiofréquence modulé reçu ;
l'échantillonnage d'un signal souhaité provenant du signal radiofréquence modulé reçu à une fréquence inférieure à la fréquence de Nyquist, provoquant ainsi un décalage de la fréquence centrale du signal souhaité à partir d'une fréquence initiale vers une fréquence inférieure ;
la réalisation d'une convolution d'un filtre en cosinus surélevé en racine carrée et d'un filtre pré-calculé, et la génération d'un signal de sortie du filtre adapté modifié ;
la génération d'un signal de sortie de l'égaliseur en fonction du signal de sortie du filtre adapté modifié ; et ,
le décodage du signal de sortie de l'égaliseur pour générer le flux de données détectées.

7. Procédé de communication selon la revendication 6 comprenant en outre :
la fourniture d'un signal de sélection au multiplexeur en fonction de la fréquence centrale ;
la fourniture d'un paramètre de fréquence en fonction de la fréquence centrale ; et
la fourniture d'une indication d'inversion de spectre en fonction de la fréquence centrale.
